# EUROPEAN PATENT APPLICATION

(11) **EP 4 697 109 A2**
(43) Date of publication of application: **18.02.2026**
(21) Application number: 25227036.8
(22) Date of filing: 29.10.2020
(51) Int. Cl.: G05B 19/042

(54) **COOKING DEVICE, CONTROL METHOD THEREFOR, CONTROL SYSTEM THEREOF AND COMPUTER-READABLE STORAGE MEDIUM**

(30) Priority: 20.11.2019 CN 201911142140; 20.11.2019 CN 201911143396
(62) Divisional of application: 20889894.0
(71) Applicant: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: DU, Haibo, Foshan, 528311 (CN)
(74) Representative: Whitlock, Holly Elizabeth Ann

(57) **Abstract**

A cooking device, a control method therefor, a control system thereof and a computer-readable storage medium. The control method for the cooking device comprises: once cooking is complete, acquiring feedback information corresponding to the current degree to which food is cooked (step 102); according to the feedback information, adjusting and saving cooking parameters corresponding to the food (step 104). According to the control method for the cooking device, once cooking ends, a user learns of an assessment by the user of the current degree to which the food is cooked with regards to the feedback information of the current degree to which the food is cooked. According to the assessment by the user of the current degree to which the food is cooked, the cooking parameters corresponding to the food are adjusted and saved, which may achieve the customization of the degree to which food is cooked, meet difference requirements of the user for the degree to which food is cooked, and increase the intelligence of the cooking device.

## Description

This application claims priority to Chinese Patent Application No. 201911142140.1 filed with China National Intellectual Property Administration on November 20, 2019 and entitled "Cooking Device and Control Method, Control System, Computer-readable Storage Medium Thereof", and claims priority to Chinese Patent Application No. 201911143396.4 filed with China National Intellectual Property Administration on November 20, 2019 and entitled "Cooking Device and Control Method, Control System, Computer-readable Storage Medium Thereof", the entire contents of which are herein incorporated by reference.

### FIELD

The present invention relates to the technical field of kitchen appliances, and more particularly, to a control method for two cooking devices, two computer-readable storage media, a control system of two cooking devices, and two cooking devices.

### BACKGROUND

In existing cooking devices, some intelligent menus, intelligent controls and intelligent identification functions are integrated in the cooking devices for the convenience of the user, so that the user can set the operating method, temperature, time and other information without using the control panel. Before leaving the factory, the manufacturer will make some cooking programs of common food materials according to the functions of the cooking devices, and the cooking programs include information about the method for use, cooking time, cooking temperature, etc.; when the user selects the menu, the cooking device automatically cooks according to the program setting. In the cooking program, when the time is over, the cooking is complete, and the user is prompted that the cooking is complete.

However, the relevant cooking parameters in the above-mentioned cooking program are all fixed, which cannot meet the needs of user differentiation, especially cannot realize the personalized setting of food material cooking degree of food material. For example, some users prefer rice having a soft mouth feel, but some users prefer rice having a soft and chewy mouth feel; for example, some users prefer cakes of burnt fragrances but some users prefer cakes with the original taste.

### SUMMARY

The present invention is intended to solve at least one of the technical problems existing in the prior art or related art.

To this end, a first aspect of the present invention provides a method for controlling a cooking device.

A second aspect of the present invention provides a computer-readable storage medium.

A third aspect of the present invention provides a control system for a cooking device.

A fourth aspect of the present invention provides a cooking device.

A fifth aspect of the present invention provides yet another method for controlling a cooking device.

A sixth aspect of the present invention provides yet another computer-readable storage medium.

A seventh aspect of the present invention provides yet another control system for a cooking device.

An eighth aspect of the present invention provides yet another cooking device.

A first aspect of the present invention provides a control method for a cooking device comprising: after the cooking is complete, acquiring feedback information corresponding to the current cooking degree of food material; adjusting and saving cooking parameters corresponding to food materials according to the feedback information.

According to the control method for a cooking device according to the present invention, feedback information about a user about the current cooking degree of food material after cooking is complete is acquired, and then it can be determined whether the current cooking degree of food material satisfies a user's eating habits; then, the cooking parameters corresponding to the food materials are adjusted and saved according to the feedback information, so that the adjusted and saved cooking parameters meet the requirements of the user for the cooking degree of food material. During the next cooking, cooking is carried out through the cooking parameters adjusted and stored this time, so as to ensure that the cooking degree of food material after the completion of cooking meets the requirements of the user for the cooking degree of food material and ensure the cooking effect of the food materials.

According to the control method for a cooking device according to the present invention, the feedback information of the user about the current cooking degree of food material is acquired, the user's evaluation of the current cooking degree of food material is obtained, and the cooking parameters corresponding to the food material are adjusted and saved according to the user' s evaluation of the current cooking degree of food material, so as to realize the self-definition of the cooking degree of food material, satisfy the user's different requirements of the cooking degree of food material, and improve the intelligence of the cooking device.

The control method for the cooking device according to the above-mentioned embodiment of the present invention may further have the following additional technical features:

In the above-mentioned embodiment, after the cooking is complete, before the step of acquiring feedback information corresponding to the current cooking degree of food material, further comprising: acquiring image information about food materials in a cooking device; identifying image information, and acquiring food material categories and food material characteristics of the food material; according to the food material category and the characteristics of food materials, determining the current cooking degree of food material.

In this embodiment, in a cooking process, firstly, image information about food materials in a cooking device is acquired, and the image information about the food materials is identified; by identifying the image information of the food material, the food material categories and the food material characteristics of the food material can be acquired; then, the cooking degree of food material is determined according to the food material categories and food material characteristics; after the food material is judged to have been well cooked, the cooking device stops working.

Specifically, different categories of food materials have different appearance characteristics (including but not limited to color, shape, etc.) and different categories of food materials have different image information. Therefore, after acquiring the image information about the food in the cooking device, comparing same with pre-stored image information so as to learn the food material category of the food; the food material characteristics of the same food material may change continuously during cooking (e.g. changes in food material color, changes in food material volume, changes in food material weight, etc.). Therefore, the current cooking degree of food material can be obtained by observing the changes of food material characteristics in real time.

In any of the above-mentioned embodiments, after the cooking is complete, before the step of acquiring feedback information corresponding to the current cooking degree of food material, further comprising: after cooking is complete, prompting and displaying the current cooking degree of food material.

In this embodiment, after the cooking is complete and the current cooking degree of food material is known, the current cooking degree of food material is displayed and prompted, so that a user can learn the current cooking degree of food material; then, the user can evaluate the current cooking degree of food material according to his own habits, and feed back the feedback information about the current cooking degree of food material to the cooking device, so that the cooking device adjusts the cooking parameters according to the user's feedback information, so as to realize the adjustment of the cooking parameters by the user, and realize the user' s self-definition of the cooking degree of food material.

In any of the above-mentioned embodiments, the step of determining the current cooking degree of food material according to the food material categories and the food material characteristics specifically comprises: according to the types and characteristics of food materials, the current cooking degree of food material is determined by cooking degree identification model. The cooking degree identification model comprises a preset cooking degree level and cooking parameters, food material categories and food material characteristics corresponding to the preset cooking degree level.

In this embodiment, different cooking degree identification models corresponding to different categories of food materials are preset in the system, and after the food material category of the food material has been acquired, a cooking degree identification model corresponding to the food material category is called; food material characteristics of the same food material will change due to different levels of the cooking degree of food material. After the cooking degree identification model corresponding to the food material category has been called, the cooking degree identification model can determine the current cooking degree of food material according to the change of food material characteristics until the cooking of the food material is done.

Specifically, the cooking degree identification model comprises a food material category, and after acquiring the food material category of the food material in the cooking device, the cooking degree identification model corresponding to the food material category of the food material currently cooked can be acquired; the cooking degree identification model comprises a preset cooking degree level and cooking parameters and food material characteristics corresponding to the preset cooking degree level, the food material characteristics of different states correspond to different levels of the cooking degree of food material, and different levels of the cooking degree of food material correspond to different cooking parameters. Therefore, after acquiring the food material characteristics of the food material, the current cooking degree of food material can be determined, and the cooking parameters corresponding to the current cooking degree of food material can be determined; and the cooking device performs cooking according to the cooking parameters corresponding to the current cooking degree of food material until the cooking is complete.

In any of the above-mentioned embodiments, the step of adjusting and saving cooking parameters corresponding to food materials according to feedback information specifically comprises: setting a plurality of sub-intervals between two adjacent preset cooking degree levels; according to the feedback information, adjusting a preset cooking degree level corresponding to the current cooking degree of food material to two adjacent preset cooking degree levels by a preset number of sub-intervals; and simultaneously adjusting a preset cooking degree level corresponding to the current cooking degree of food material to correspond to cooking parameters and food material characteristics in the cooking degree identification model.

In this embodiment, in the process of adjusting and saving cooking parameters corresponding to food materials according to feedback information, firstly, a plurality of sub-intervals are set between two adjacent preset cooking degree levels so as to divide a cooking degree identification model into a plurality of cooking stages, and each sub-interval corresponds to a certain cooking duration, and each cooking degree stage corresponds to a different levels of the cooking degree of food material; then, according to the user's feedback information, the preset cooking degree level corresponding to the current cooking degree of food material is adjusted to one of two adjacent preset cooking degree levels by a preset number of sub-intervals. That is to say, the specific position of the preset cooking degree level corresponding to the current cooking degree of food material in the cooking degree identification model is adjusted according to the feedback information about the user; at the same time, the preset cooking degree level corresponding to the current cooking degree of food material is adjusted to correspond to cooking parameters and food material characteristics in the cooking degree identification model, so as to ensure that the adjusted preset cooking degree level has new cooking parameters and new food material characteristics corresponding thereto in the cooking degree identification model.

In addition, when the user cooks the same food material again, the cooking degree identification model judges the cooking degree of food material according to the new food material characteristics, and calls the cooking parameters corresponding thereto according to the cooking degree of food material, and the cooking degree of food material after cooking is more in line with the user's requirements.

In any of the above embodiments, the preset cooking degree level comprises: uncooked, soft, cooked, over cooked, and burnt; the number of sub-intervals between two adjacent preset cooking degree levels is three.

In this embodiment, according to the cooking habits and cooking degree evaluation of the mass user, the preset cooking degree level includes but is not limited to: the user can feed back the corresponding feedback information according to the current cooking degree of food material; the number of sub-intervals between two adjacent preset cooking degree levels is three, and an equal share is ensured between two adjacent preset cooking degree levels where the three sub-intervals are located, so as to divide the cooking degree identification model into multiple cooking stages.

In any of the above-mentioned embodiments, the step of adjusting a preset cooking degree level corresponding to a current cooking degree of food material to two adjacent preset cooking degree levels by a preset number of sub-intervals according to feedback information specifically comprises: the feedback information indicates that the food is mostly uncooked, the preset cooking degree level about the well cooking is moved towards an over-cooked side by a sub-interval, and at the same time the sub-interval between the cooked and the adjusted cooked is expanded in an equal proportion, and the sub-interval between the adjusted cooked and the burnt in an equal proportion is compressed; the feedback information indicates that the food is mostly uncooked, the preset cooking degree level is moved towards the soft side by a sub-interval, at the same time the sub-interval between the uncooked and the adjusted cooked is compressed in an equal proportion, and the sub-interval between the adjusted cooked and the burnt are expanded in an equal proportion; the feedback information indicates appropriate and the preset cooking degree level is adjusted.

In this embodiment, the step of adjusting a preset number of sub-intervals to two adjacent preset cooking degree levels according to a preset cooking degree level corresponding to the current cooking degree of food material includes but is not limited to the following cases:

when the feedback information indicates that the food is mostly uncooked, it is indicated that the user believes that the food material is insufficiently cooked, and cooking should be continued for a period of time. Therefore, the preset cooking degree level is moved to one side of the over-cooked preset cooking degree level by a sub-interval, and then the proportion of the interval from the preset cooking degree level is expanded to the preset cooking degree level in the cooking degree identification model; at the same time, the proportion of the interval between the preset cooking degree level and the preset cooking degree level of burnt in the cooking degree identification model is reduced. Further, the duration of each sub-interval is adjusted, the sub-interval between the uncooked and adjusted cooked is expanded in equal proportions, and the sub-interval between the cooking degree of food material and burnt is compressed in equal proportions.

When the feedback information indicates that the food is mostly cooked, indicating that the user believes that the food material is overcooked, the cooking should be ended in advance for some time. Therefore, the preset cooking degree level is moved to one side of the soft preset cooking degree level by a sub-interval, and then the proportion of the interval is reduced from the preset cooking degree level to the soft preset cooking degree level in the cooking degree identification model; the proportion of the interval between the preset cooking degree level and the preset cooking degree level of burnt is expanded in the cooking degree identification model. Further, the duration of each sub-interval is adjusted, the sub-interval between the uncooked and adjusted cooked is reduced in equal proportions, and the sub-interval between the cooking degree of food material and burnt is reduced in equal proportions.

When the feedback information indicates appropriate, it indicates that the current cooking degree of food material corresponds to the taste of the user. Therefore, no adjustment is made to the cooking degree identification model.

The second aspect of the present invention provides a computer-readable storage medium having stored thereon a computer program which, when executed by a processor, implements the control method for the cooking device according to any one of the first aspect of the present invention.

The present invention provides a computer-readable storage medium having stored thereon a computer program which, when executed by a processor, can implement the control method for the cooking device according to any one of the first aspects of the present invention. Accordingly, all the advantageous effects of the control method for the cooking device described above will not be set forth herein.

A third aspect of the present invention provides a control system of a cooking device, comprising: a memory configured and adapted to store a computer program; a processor configured to execute a computer program to implement the control method for the cooking device according to any one of the first aspects of the present invention.

The control system of the cooking device according to the present invention comprises a memory and a processor. Here, the control method for the cooking device according to any one of the first aspects of the present invention can be implemented when the processor executes a computer program stored in the memory. Accordingly, all the advantageous effects of the control method for the cooking device described above will not be set forth herein.

A fourth aspect of the present invention provides a cooking device comprising: A body, wherein a cooking cavity is provided in the body, and food materials can be placed in the cooking cavity; an image acquisition apparatus arranged on the body and used for acquiring image information about the food material, and an information acquisition device arranged on the body and used for acquiring feedback information corresponding to the current cooking degree of food material; and as for the control system of the cooking device of the third aspect of the present invention, the control system of the cooking device is electrically connected to the image acquisition apparatus and the information acquisition device, and can adjust and save the cooking parameters corresponding to the food materials according to the feedback information.

The cooking device of the present invention includes a body, an image acquisition apparatus, an information feedback device, and a control system of the cooking device of the third aspect of the present invention. A cooking cavity is provided in the body, and food materials can be placed in the cooking cavity; in the cooking process of the food material, the image acquisition apparatus acquires image information about the food material in the cooking cavity in real time, and sends the image information to the control system of the cooking device; the control system of the cooking device acquires the current cooking degree of food material according to the image information about the food material, and controls the cooking device to stop cooking after the food material is mature; after the cooking is complete, the information collection device acquires the user's evaluation corresponding to the pre-food material cooking degree of food material, obtains feedback information corresponding to the current cooking degree of food material, and sends the feedback information to the control system of the cooking device; the control system of the cooking device trains the cooking degree identification model according to the feedback information, adjusts the relevant information in the cooking degree identification model, realizes the self-definition of the cooking degree of food material, satisfies the different demands of different users on the cooking degree of food material, and improves the intelligence of the cooking device.

Specifically, in the process of training the cooking degree identification model, the distribution of the preset cooking degree level within the cooking degree identification model and the corresponding relationship between the preset cooking degree level and the cooking parameters and food material characteristics are adjusted.

Specifically, the information collection device may adopt a voice identification method, a control key method or a touch screen method.

The cooking device according to the above-mentioned embodiment of the present invention can also have the following additional technical features:

In the above-mentioned embodiment, the cooking device further comprises a main controller, wherein the main controller is provided inside the body, and the control system of the cooking device is located inside the main controller.

In this embodiment, a main controller is provided in a body of the cooking device, and a control system of the cooking device is located inside the main controller. After the image information about the food material is acquired by the image acquisition apparatus, the main controller identifies the food material type and the current cooking degree of food material according to the received image information. That is, the above-mentioned identification process of the food material type and the current cooking degree of food material can be realized locally in the cooking device, without connecting an external network, thereby simplifying the structure of the cooking device.

In the above-mentioned embodiment, the cooking device further comprises a main controller and a networking unit, wherein the main controller is arranged inside the body and is connected to the remote server via the networking unit, and the control system of the cooking device is located inside the remote server.

In this embodiment, a main controller and a networking unit are provided in the body of the cooking device, and the main controller is connected to a remote server via the networking unit, and the control system of the cooking device is located inside the remote server. After the image information about the food material is acquired by the image acquisition apparatus, the main controller sends the image information to the remote server via the networking unit, and the remote server identifies the food material type and the current cooking degree of food material according to the received image information, and then sends the identification result to the main controller. That is, the identification process of the food material type and the current cooking degree of food material is realized at the remote server, which can reduce the difficulty for the internal program of the main controller and simplify the development and manufacturing costs.

In any of the above-mentioned embodiments, the image acquisition apparatus comprises a camera for acquiring image information about the food material; an image processing unit electrically connected to the camera and the control system of the cooking device for transmitting image information to the control system of the cooking device.

In this embodiment, the image acquisition apparatus comprises a camera and an image processing unit. The camera can acquire image information about the food material in real time, and send the acquired image information to the image processing unit; after receiving the image information about the food material, the image processing unit sends the image information to a control system of the cooking device; the control system of the cooking device identifies the food material type and the current cooking degree of food material, and calls a cooking parameter corresponding to the current cooking degree of food material to control the operation of the cooking device until the cooking is complete.

Specifically, the image processing unit may also perform a simple processing of the image information of the food material, for example a format conversion, so that the converted image information complies with the format requirements of the control system of the cooking device.

In any of the above embodiments, further comprising: a heating unit provided in the body and electrically connected to the main controller, the main controller controlling the operation of the heating unit according to the cooking parameter; an operation setting unit provided on the body and electrically connected to the main controller for acquiring an operation instruction.

In this embodiment, the cooking device further includes a heating unit and an operation setting unit. The heating unit is electrically connected to the main controller, and after acquiring the current cooking degree of food material, the main controller controls the heating unit to work according to a cooking parameter corresponding to the current cooking degree of food material until after cooking is complete; the operation setting unit is provided on the body and can acquire an operation instruction of a user before or during cooking to control the operation of the cooking program.

Specifically, the main controller may adjust a different heating unit or adjust the heating power of the heating unit according to the current cooking degree of food material; the user may input a cooking start instruction, input a cooking pause instruction, input a cooking stop instruction, call up a cooking program, etc. by an operation setting unit.

A fifth aspect of the present invention provides a control method for a cooking device, the method comprising: acquiring image information about a food, and identifying the image information so as to determine a food material type of the food; acquiring a cooking program corresponding to food, and controlling the operation of the cooking device according to the cooking program; in a cooking process, acquiring a cooking degree level and saving image information corresponding to the cooking degree level; according to the cooking degree level and the image information corresponding to the cooking degree level, creating a cooking degree identification model corresponding to the food material type and cooking program.

According to the control method for the cooking device according to the present invention, firstly image information about a food is acquired, and a food material type of the food is determined by means of identifying the image information; and then a cooking program corresponding to the food is acquired, and a menu of the food is determined according to the food material type and the cooking program, and the operation of the cooking device is controlled. During the cooking process, changes in the food are observed and the cooking degree level set by the user is acquired while image information of the food at each cooking degree level is saved. After cooking is complete, one or more levels of the cooking degree of food material can be obtained, and image information corresponding to each cooking degree level is saved. Therefore, according to the cooking degree level and the image information corresponding to the cooking degree level, a cooking degree identification model corresponding to the food material type and the cooking program is created. The food cooking degree model can identify the cooking degree of food material when the same food material type is cooked next time by using the same cooking program, ensure the cooking degree of food material can meet requirements of the user after the cooking is complete, and realize the user's self-definition of the cooking degree of food material.

According to the control method for a cooking device provided in the present invention, a user sets a cooking degree level and saves image information corresponding to the cooking degree level at his own initiative during the cooking process of food, and can create a cooking degree identification model corresponding to the food material type and a cooking program, solve the problem of solidifying the cooking degree identification model for a cooking device, and satisfy a user's differentiated demands of cooking degree level. When the user cooks the same food material type using the same cooking program again, the cooking device judges the cooking degree of food material according to the cooking degree identification model corresponding thereto, and ensures the cooking effect of the food, especially the effect of the cooking degree of food material.

The control method for the cooking device according to the above-mentioned embodiment of the present invention may further have the following additional technical features:
In the above-mentioned embodiment, further, the step of acquiring a cooking degree level and saving image information corresponding to the cooking degree level specifically comprises: displaying image information of food; acquiring a cooking degree setting instruction corresponding to image information; according to the cooking degree setting instruction, setting a cooking degree level and saving image information corresponding to the cooking degree level.

In this embodiment, the image information of the food changes according to the cooking degree of food material during the cooking process, and the cooking degree of food material can be determined by observing the change of the image information of the food. Therefore, the control method for a cooking device according to the present invention displays image information about a food to a user after acquiring the image information about the food, the user observes the change situation of the image information, judges the cooking degree level according to its own standard, and inputs a cooking degree setting instruction after the cooking degree level satisfies its own standard so as to set the cooking degree level, and saves the image information about the food at the cooking degree level. Specifically, the user may enter one or more cooking degree setting instructions during the cooking process.

Image information is displayed during a cooking process so that a user knows a change in the cooking degree of food material in real time; by setting the cooking degree of food material through the cooking degree setting instruction, the user can self-define the level cooking degree of food material and satisfy the user's personalized setting. Specifically, the image information of the food can be displayed in real time so that the user can obtain the cooking degree of food material in real time.

Specifically, during the cooking process, the cooking degree characteristic value of the food is changed, and the change of the cooking degree characteristic value can be observed based on the image information, and the user judges the cooking degree of food material by observing the cooking degree characteristic value of the food. The cooking degree characteristic values include, but are not limited to: color of food, volume of food, weight of food.

In any of the above-mentioned embodiments, the step of creating a cooking degree identification model corresponding to a food material type and a cooking program according to a cooking degree level and image information corresponding to the cooking degree level further comprises: cooking degree corresponding relationship between food material type and cooking process and cooking degree level is recorded; an image corresponding relationship between a food material type and a cooking program and image information is recorded; a cooking degree identification model is created according to the cooking degree corresponding relationship and image corresponding relationship.

In this embodiment, when different foods are at the same cooking degree level under the same cooking program, the cooking degree characteristic values thereof are different, and therefore foods of different food material types need different cooking degree identification models for cooking degree identification; when the same food is in the same cooking degree level under different cooking processes, the cooking degree characteristic values are also different, so the same food needs different cooking degree identification models in different cooking processes. For this reason, the control method for a cooking device according to the present invention records a cooking degree corresponding relationship between a food material type and a cooking program and a cooking degree level after acquiring a cooking degree level and corresponding image information, and records a cooking degree corresponding relationship between a food material type and a cooking program and a cooking degree level; then, based on the cooking degree corresponding relationship and the image corresponding relationship, a cooking degree identification model corresponding to the food material type and the cooking program is created.

Creating and saving the cooking degree identification model according to cooking degree corresponding relationship and the image corresponding relationship can ensure that the cooking degree identification model matches the food material type on the one hand, and the cooking degree identification model matches the cooking program of the food on the other hand. When the user uses the cooking device to cook again, the cooking degree identification model created this time is called for identification to ensure the accuracy of cooking degree identification.

In any of the above embodiments, further, after the step of creating a cooking degree identification model, further comprising: acquiring a plurality of foods of different food material types, a cooking program corresponding to the different foods, a cooking degree level and image information corresponding to the cooking degree level; training a cooking degree identification model according to the food material type, cooking program, a cooking degree level and image information corresponding to the cooking degree level; and saving the trained cooking degree identification model.

In this embodiment, after a cooking degree identification model corresponding to a food material type and a cooking program has been created, the created cooking degree identification model is trained to ensure the accuracy of the cooking degree identification model. Specifically, acquiring a plurality of foods of different food material types, inputting a cooking program corresponding to each food, acquiring the cooking degree level and image information corresponding to the food material types and the cooking program, and constructing a cooking degree training data packet based on the above-mentioned information; the established cooking degree identification model is trained by the cooking degree training data package, and then the cooking degree identification model after the training is completed is saved.

Based on the training of the cooking degree identification model, on the one hand, the corresponding relationship between the cooking degree identification model and the food material types and cooking programs can be ensured, and on the other hand, the cooking degree identification model can meet the needs of users. In addition, the cooking degree training data packet occupies a certain weight in the whole training set, and the more user training times, the cooking degree identification model will be closer to the user's user-defined cooking degree of food material. The next time the user starts the automatic method, the cooking device judges the cooking degree of food material according to the cooking degree identification model completed by the new training, thereby realizing the user-defined cooking degree of food material.

In any of the above-mentioned embodiments, the step of acquiring a cooking program corresponding to food and controlling the operation of the cooking device according to the cooking program further comprise: acquiring a preset cooking program corresponding to the food material type, and controlling the operation of the cooking device according to the cooking program; or acquiring a cooking parameter corresponding to the food material type, and controlling the operation of the cooking device according to the cooking parameter.

In this embodiment, different cooking programs are preset in the cooking device, and different food material types correspond to different cooking programs. Therefore, after the food material type of the food is acquired, a cooking program corresponding to the food material type is searched inside the cooking device. If a cooking program corresponding to a food material type is preset in a cooking device, directly acquiring a cooking program control corresponding to the food material type, and controlling the operation of the cooking device according to the cooking degree of food material; if a cooking program corresponding to the food material type is not preset in the cooking device, it is necessary to acquire user-input cooking parameters and control the operation of the cooking device according to the user-input cooking parameters. Specifically, cooking parameters include, but are not limited to: cooking mode, cooking temperature, cooking time, etc.

Note that, in the case where a cooking program corresponding to the food material type is preset in the cooking device, the user can still input cooking parameters and control the cooking device to operate according to the cooking parameters input by the user. Through the above-mentioned arrangement, the corresponding relationship between the food material type and the cooking program can be ensured, and the corresponding relationship between the created cooking degree identification model and the cooking program and the food material type can be further ensured, and the cooking taste and cooking degree of food material of different food material types can be ensured, and the cooking effect and cooking degree identification accuracy of the food can be improved.

In any of the above aspects, further, a cooking mode, a cooking time and a cooking temperature are set within the cooking program.

In this embodiment, the cooking program includes, but is not limited to: cooking mode, cooking time and cooking temperature. Based on the setting of the above information within the cooking program, different cooking modes of the cooking device for food can be achieved.

In any of the above embodiments, further, the cooking degree level comprises: uncooked, soft, cooked, over cooked, and burnt.

In this embodiment, the cooking degree levels include but are not limited to: uncooked, soft, cooked, over cooked, and burnt. Based on the above-mentioned level of cooking degree setting, the user can satisfy the setting of different levels of the cooking degree of food material in the cooking process, and monitor the whole process of the cooking process in real time.

A sixth aspect of the present invention provides a computer-readable storage medium having stored thereon a computer program which, when executed by a processor, implements the control method for the cooking device according to any one of the fifth aspect of the present invention.

The computer-readable storage medium provided herein, when a computer program stored thereon is executed by a processor, can implement the control method for the cooking device according to any one of the fifth aspects of the present invention. Accordingly, all the advantageous effects of the control method for the cooking device described above will not be set forth herein.

A seventh aspect of the present invention provides a control system of a cooking device, comprising: a memory configured and adapted to store a computer program; a processor configured to execute a computer program to implement the control method for the cooking device according to any one of the fifth aspects of the present invention.

The control system of the cooking device according to the present invention comprises a memory and a processor. Here, the control method for the cooking device according to any one of the fifth aspects of the present invention can be implemented when the processor executes a computer program stored in the memory. Accordingly, all the advantageous effects of the control method for the cooking device described above will not be set forth herein.

An eighth aspect of the present invention provides a cooking device comprising: a body in which food can be placed; an image acquisition apparatus provided on the body for acquiring image information about the food; an operation setting unit provided on the body for acquiring a cooking program and a cooking degree setting instruction corresponding to the food; and a control system of the cooking device according to the seventh aspect of the present invention, the control system of the cooking device being electrically connected to the image acquisition apparatus and the operation setting unit.

The cooking device according to the present invention includes a body, an image acquisition apparatus, an operation setting unit, and a control system of the cooking device according to the seventh aspect of the present invention. A cooking cavity is provided in the body, and food can be placed in the cooking cavity. In a food cooking process, an image acquisition apparatus acquires image information about food in a cooking cavity, and sends the image information to a control system of a cooking device, and the control system of the cooking device identifies the image information and determines a food material type of the food; the operation setting unit may acquire a cooking program corresponding to the food, acquire a cooking degree setting instruction input by a user during the cooking process, set different levels of the cooking degree of food material according to the cooking degree setting instruction by a control system of the cooking device, and save image information corresponding to the cooking degree level.

The control system of the cooking device creates a cooking degree identification model corresponding to the food material type and the cooking program based on the cooking degree level and the image information corresponding to the cooking degree level, and the food cooking degree model is used for identifying the cooking degree of food material.

When the user next cooks same food material type using the same cooking program, the control system of the cooking device identifies the cooking degree of food material according to the cooking degree identification model created this time, and controls the cooking device to stop working after the food after cooking is complete, so as to ensure that the food after the cooking is complete meets the cooking degree requirements of the user.

The cooking device according to the present invention can solve the defect of a cured cooking degree identification model of a cooking device, and satisfy the user's differentiated taste requirements.

Specifically, when a cooking program corresponding to a food material type is preset in the cooking device, the operation setting unit directly calls the cooking program corresponding to the food material type, and controls the operation of the cooking device according to the cooking program; when the cooking program corresponding to the food material type is not preset in the cooking device, the operation setting unit records the cooking parameters manually set by the user after the food material type of the food is acquired, and controls the cooking program to work according to the cooking parameters. The cooking parameters include, but are not limited to: cooking mode, cooking temperature, cooking time, etc.

The cooking device according to the above-mentioned embodiment of the present invention can also have the following additional technical features:

In the above aspect, further, the cooking device further includes a main controller provided inside the body, and the control system of the cooking device is located inside the main controller.

In this embodiment, a main controller is provided in a body of the cooking device, and a control system of the cooking device is located inside the main controller. After the image information about the food is acquired by the image acquisition apparatus, the main controller identifies the food material type of the food according to the received image information. That is, the above-mentioned identification process of the food material type is carried out locally at the cooking device without connecting an external network, simplifying the structure of the cooking device.

In the above-mentioned embodiment, further, the cooking device comprises a main controller and a networking unit, wherein the main controller is provided inside the body and is connected to a remote server via the networking unit, and the control system of the cooking device is located inside the remote server.

In this embodiment, a main controller and a networking unit are provided in the body of the cooking device, and the main controller is connected to a remote server via the networking unit, and the control system of the cooking device is located inside the remote server. After the image information about the food is acquired by the image acquisition apparatus, the main controller sends the image information to the remote server via the networking unit, and the remote server identifies the food material type of the food according to the received image information, and then sends the identification result to the main controller. That is, the above-mentioned identification process of the food material type is implemented in the remote server, which can reduce the difficulty for the internal program of the main controller and simplify the development and manufacturing costs.

In any of the above embodiments, further, the image acquisition apparatus comprises: a camera provided on the body for acquiring image information about food; an image processing unit electrically connected to the camera and the control system of the cooking device for transmitting image information to the control system of the cooking device.

In this embodiment, the image acquisition apparatus comprises a camera and an image processing unit. The camera can acquire image information about the food and send the acquired image information to the image processing unit; after receiving the image information about the food, the image processing unit sends the image information to a control system of the cooking device; and the control system of the cooking device identifies the received image information so as to acquire the food material type of the food.

Specifically, the image processing unit may also perform a simple processing of the image information of the food, for example a format conversion, so that the converted image information complies with the format requirements of the control system of the cooking device. The camera acquires image information of food in real time.

In any of the above-mentioned embodiments, further comprising a display unit which is electrically connected to the image for displaying image information; a heating unit electrically connected to the main controller, and the main controller controls the operation of the heating unit according to the cooking program.

In this embodiment, the cooking device further includes a display unit and a heating unit. The display unit is electrically connected to the image acquisition device, and can display the image information acquired by the image acquisition apparatus to a user, and prompt the user to input a cooking degree setting instruction; the heating unit is electrically connected to the main controller, and the main controller controls the operation of the heating unit until the cooking of the food is completed.

In any of the above embodiments, further, a cooking mode, a cooking time and a cooking temperature are set in a cooking program; and/or the cooking degree level include: uncooked, soft, cooked, over cooked, and burnt.

In this embodiment, the cooking program includes, but is not limited to: cooking mode, cooking time and cooking temperature. Based on the setting of the above information within the cooking program, different cooking modes of the cooking device for food can be achieved.

In this embodiment, the cooking degree levels include but are not limited to: uncooked, soft, cooked, over cooked, and burnt. Based on the above-mentioned level of cooking degree setting, the user can meet the requirement that the food is at different levels of the cooking degree of food material during the cooking process, and monitor the whole process of the cooking process in real time.

Additional aspects and advantages of the present invention will be set forth in part in the description which follows, or may be learned by practice of the present invention.

### BRIEF DESCRIPTION OF THE DRAWINGS

The above and/or additional aspects and advantages of the present invention will become apparent and readily appreciated from the following description of embodiments taken in conjunction with the accompanying drawings of which:
Fig. 1 is a schematic flowchart of a control method for the cooking device according to an embodiment of the present invention.
Fig. 2 is a schematic flowchart of a control method for the cooking device according to still another embodiment of the present invention.
Fig. 3 is a detailed schematic flow chart of step 210 in the control method for the cooking device of the embodiment shown in Fig. 2.
Fig. 4 is a schematic flowchart of a control method for a cooking device according to still another embodiment of the present invention.
Fig. 5 is a block diagram of a control system of a cooking device according to an embodiment of the present invention.
Fig. 6 is a block diagram of a cooking device according to an embodiment of the present invention.
Fig. 7 is a detailed operational schematic flowchart of the cooking device of the embodiment shown in Fig. 6.
Fig. 8 is a schematic flowchart of a control method for the cooking device according to still another embodiment of the present invention.
Fig. 9 is a detailed schematic flow chart of step 606 in the control method for the cooking device of the embodiment shown in Fig. 8.
Fig. 10 is a detailed schematic flow chart of step 608 in the control method for the cooking device of the embodiment shown in Fig. 8.
Fig. 11 is a schematic flowchart of a control method for the cooking device according to still another embodiment of the present invention.
Fig. 12 is a block diagram of a control system of a cooking device according to an embodiment of the present invention.
Fig. 13 is a block diagram of a cooking device according to an embodiment of the present invention.
Fig. 14 is a detailed operational schematic flowchart of the cooking device of the embodiment shown in Fig. 13.

### DETAILED DESCRIPTION OF THE INVENTION

In order that the above objects, features and advantages of the present invention can be more clearly understood, the present invention will be described in further detail below with reference to the accompanying drawings and detailed description. It should be noted that the embodiments and features of the embodiments of the present invention may be combined with each other without conflict.

In the following description, numerous specific details are set forth in order to provide a thorough understanding of the present invention, however, the present invention may be practiced in other ways than those described herein, and therefore the scope of the present invention is not limited by the specific embodiments disclosed below.

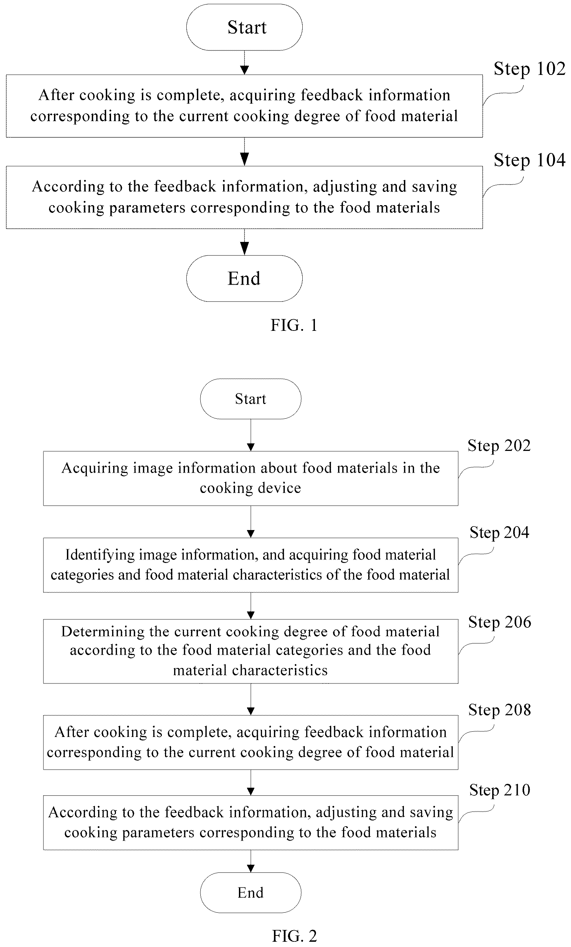

A control method for a cooking device, a computer-readable storage medium, a control system of a cooking device, and a cooking device provided according to some embodiments of the present invention are described below with reference to Figs. 1 to 14.

### Embodiment 1:

Fig. 1 is a schematic flow chart of a control method for the cooking device according to the embodiment 1 of the present invention. As shown in Fig. 1, the control method for the cooking device includes:
step 102, after cooking is complete, acquiring feedback information corresponding to the current cooking degree of food material; and
step 104, according to the feedback information, adjusting and saving cooking parameters corresponding to the food materials.

The control method for the cooking device provided in the embodiment obtains feedback information about the current cooking degree of food material of the user after the cooking is complete, so as to ensure whether the current cooking degree of food material satisfies the eating habits of the user; adjusting and saving cooking parameters corresponding to the food material according to the feedback information, so that the adjusted and saved cooking parameters meet the requirements of the user for the cooking degree of food material. During the next cooking, cooking is carried out through the cooking parameters adjusted and stored this time, so as to ensure that the cooking degree of food material after the completion of cooking meets the requirements of the user for the cooking degree of food material and ensure the cooking effect of the food materials.

User feedback information about the current cooking degree of food material after the end of cooking, and a cooking degree evaluation of the food materials which are cooked under the cooking parameters by the user are acquired; different users have different cooking degree requirements compared to food materials. By means of the control method for a cooking device provided in the present invention, a user's different requirements for the cooking degree of food material can be met, and the intelligent type of cooking device can be improved by self-defining the cooking degree of food material for cooking by the cooking device.

### Embodiment 2:

Fig. 2 is a schematic flow chart of a control method for the cooking device according to the embodiment 2 of the present invention. As shown in Fig. 2, the control method for the cooking device includes:
step 202, acquiring image information about food materials in the cooking device;
step 204, identifying image information, and acquiring food material categories and food material characteristics of the food material;
step 206, determining the current cooking degree of food material according to the food material categories and the food material characteristics;
step 208, after cooking is complete, feedback information corresponding to the current cooking degree of food material is acquired; and
step 210, according to the feedback information, adjusting and saving cooking parameters corresponding to the food materials.

The embodiment provides a control method for the cooking device, which can acquire a food material category and a food material characteristic of a food material by means of image identification. In the cooking process, firstly acquiring image information about food materials in a cooking device, and identifying the image information about the food materials; by identifying the image information of the food material, the food material categories and the food material characteristics of the food material can be obtained; then, the current cooking degree of food material is determined according to the types and characteristics of food materials. After the food material is judged to have been well cooked, the cooking device stops working.

Specifically, different categories of food materials have different appearance characteristics (including but not limited to color, shape, etc.) and different categories of food materials have different image information. Therefore, after acquiring the image information of the food in the cooking device, same is compared with pre-stored image information, the food material category of the food can be obtained.

Specifically, the food material characteristics of the same food material may change continuously during cooking (e.g. changes in food material color, changes in food material volume, changes in food material weight, etc.). Therefore, the current cooking degree of food material can be obtained by observing the changes of food material characteristics in real time.

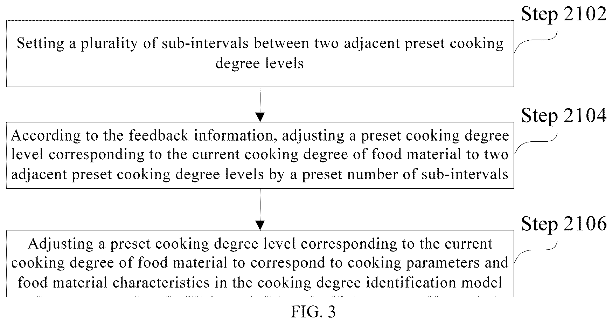

Further, Fig. 3 shows a specific schematic flow chart of step 210 in the control method for the cooking device of the embodiment shown in Fig. 2, the step 210 specifically comprising:
step 2102, setting a plurality of sub-intervals between two adjacent preset cooking degree levels;
step 2104, according to the feedback information, adjusting a preset cooking degree level corresponding to the current cooking degree of food material to two adjacent preset cooking degree levels by a preset number of sub-intervals; and
step 2106, adjusting a preset cooking degree level corresponding to the current cooking degree of food material to correspond to cooking parameters and food material characteristics in the cooking degree identification model.

In this embodiment, a plurality of sub-intervals are firstly set between two adjacent preset cooking degree levels so as to divide the cooking degree identification model into a plurality of cooking stages, and each sub-interval corresponds to a certain cooking duration, and each cooking degree stage corresponds to a different levels of the cooking degree of food material; and adjusting the specific position of the preset cooking degree level corresponding to the current cooking degree of food material in the cooking degree identification model according to the feedback information about the user, at the same time, adjusting the preset cooking degree level corresponding to the current cooking degree of food material, to correspond to the cooking parameter and the food material characteristic in the cooking degree identification model.

Based on the above-mentioned adjustment, when the user cooks the same food material again, the cooking degree identification model judges the cooking degree of food material according to the corresponding relationship between the adjusted preset cooking degree level and the food material characteristics, and obtains corresponding cooking parameters according to the cooking degree of food material, so as to ensure the cooking effect on the food material, so that the cooking degree of food material after the cooking is complete meets the user requirements more.

Specifically, the preset cooking degree levels include but are not limited to: uncooked, soft, cooked, over cooked, and burnt. The above-mentioned preset cooking degree level can satisfy different cooking degree requirements of a user for food materials, and can obtain a specific evaluation of the current cooking degree of food material of the user for food materials.

Specifically, the number of sub-intervals between two adjacent preset cooking degree levels is three, and an equal share is ensured between two adjacent preset cooking degree levels where the three sub-intervals are located, so as to divide the cooking degree identification model into a plurality of cooking stages.

Furthermore, the specific manner of adjusting the preset cooking degree level corresponding to the current cooking degree of food material to correspond to the cooking parameters and food material characteristics in the cooking degree identification model includes but is not limited to the following cases:

The first case is that the feedback information indicates that the food is mostly uncooked, which indicates that the user believes that the food material is insufficiently cooked and cooking should be continued for a period of time. Therefore, the preset cooking degree level is moved to one side of the over-cooked preset cooking degree level by a sub-interval, and then the proportion of the interval from the preset cooking degree level is expanded to the preset cooking degree level in the cooking degree identification model; at the same time, the proportion of the interval between the preset cooking degree level and the preset cooking degree level of burnt in the cooking degree identification model is reduced. Further, the duration of each sub-interval is adjusted, the sub-interval between the uncooked and adjusted cooked is expanded in equal proportions, and the sub-interval between the cooking degree of food material and burnt is compressed in equal proportions.

The second case is that the feedback information indicates that the food is mostly cooked, which means that the user thinks that the food material is overcooked, and that the cooking should be in advance. Therefore, the preset cooking degree level is moved to one side of the soft preset cooking degree level by a sub-interval, and then the proportion of the interval is reduced from the preset cooking degree level to the soft preset cooking degree level in the cooking degree identification model; the proportion of the interval between the preset cooking degree level and the preset cooking degree level of burnt is expanded in the cooking degree identification model. Further, the duration of each sub-interval is adjusted, the sub-interval between the uncooked and adjusted cooked is reduced in equal proportions, and the sub-interval between the cooking degree of food material and burnt is reduced in equal proportions.

The third case is that the feedback information indicates appropriate, which indicates that the user believes that the current cooking degree of food material meets its cooking degree requirements for the food material. Therefore, no adjustment is made to the cooking degree identification model.

### Embodiment 3:

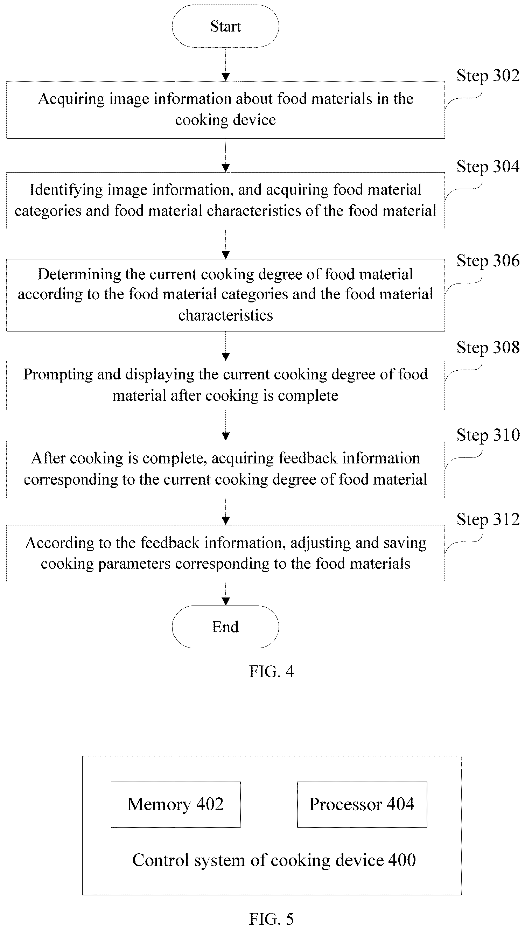

Fig. 4 is a schematic flow chart of a control method for the cooking device according to the embodiment 3 of the present invention, and as shown in Fig. 4, the control method for the cooking device includes:
step 302, acquiring image information about food in the cooking device;
step 304, identifying image information, and acquiring food material categories and food material characteristics of the food material;
step 306, determining the current cooking degree of food material according to the food material categories and the food material characteristics;
step 308, after cooking is complete, prompting and displaying the current cooking degree of food material;
step 310, after cooking is complete, acquiring feedback information corresponding to the current cooking degree of food material; and
step 312, according to the feedback information, adjusting and saving cooking parameters corresponding to the food materials.

The control method for the cooking device according to the embodiment displays and prompts the current cooking degree of food material after the cooking is complete and the current cooking degree of food material is known, so that a user can learn the current cooking degree of food material; the user can make an evaluation on the current cooking degree of food material according to his own habits, and feed back the feedback information about the current cooking degree of food material to the cooking device, so that the cooking device adjusts the cooking parameters according to the feedback information about the user, so as to realize the adjustment of the cooking parameters by the user, and realize the self-definition of the user's specific cooking degree of food material.

### Embodiment 4:

The embodiment 4 of the present invention provides a computer-readable storage medium having stored thereon a computer program which, when executed by a processor, can implement the control method for the cooking device according to any of the above-mentioned embodiments of the present invention. Accordingly, all the advantageous effects of the control method for the cooking device described above will not be set forth herein.

### Embodiment 5:

As shown in Fig. 5, the embodiment 5 of the present invention provides a control system 400 of a cooking device, including a memory 402 and a processor 404. The processor 404 executes the computer program stored in the memory 402; the control method for the cooking device according to any of the above-mentioned embodiments of the present invention can be implemented. Accordingly, all the advantageous effects of the control method for the cooking device described above will not be set forth herein.

### Embodiment 6:

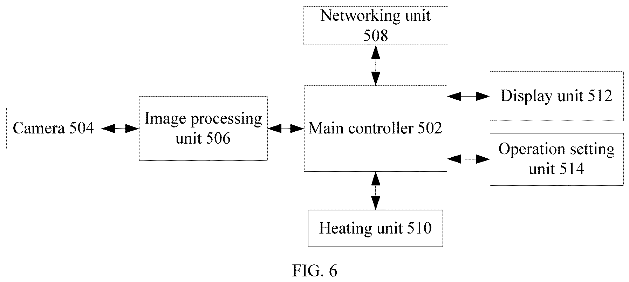

As shown in Fig. 6, the embodiment 6 of the present invention provides a cooking device, comprising: a body, an image acquisition apparatus, an information pickup device, and a control system of a cooking device according to embodiment 5 of the present invention.

The cooking cavity in the body can place and cook food materials; the image acquisition apparatus can acquire image information about the food material in real time during the cooking process; the control system of the cooking device can acquire the current cooking degree of food material according to the image information about the food material, and then adjust the cooking parameters according to the current cooking degree of food material until the cooking ends; the information collection device can acquire feedback information about the current cooking degree of food material by the user after the cooking is complete, and then the control system of the cooking device adjusts the cooking parameters corresponding to the food material according to the feedback information.

The cooking device according to the present invention can acquire user feedback information about the current cooking degree of food material after the cooking of the food materials is completed, and then a cooking degree identification model is trained according to the feedback information so as to realize the self-definition of the cooking degree of food material, satisfy the user's cooking degree, and improve the intelligence of the cooking device.

Specifically, the cooking degree identification model includes a preset cooking degree level and cooking parameters, food material categories and food material characteristics corresponding to the preset cooking degree level. In the process of training the cooking degree identification model, the distribution of the preset cooking degree level in the cooking degree identification model is adjusted based on the feedback information, and the cooking parameters and food material characteristics corresponding to the preset cooking degree level are changed accordingly.

Specifically, as shown in Fig. 6, the image capturing apparatus includes a camera 504 and an image processing unit 506. The camera 504 can acquire image information about the food material in real time, and sends the acquired image information to the image processing unit 506; the image processing unit 506 transmits image information to the control system of the cooking device so that the control system of the cooking device identifies different levels of the cooking degree of food material and performs subsequent work.

Specifically, the image processing unit 506 may also perform simple processing of the image information of the food material, such as format conversion, so that the converted image information conforms to the format requirements of the control system of the cooking device.

Further, as shown in Fig. 6, the cooking device further includes a heating unit 510 and an operation setting unit 514. The operation setting unit 514 can acquire an operation instruction of a user before the cooking starts or during the cooking so as to control the cooking program to work; the main controller 502 may adjust the heating power of the heating unit 510 according to the heating unit 510 different from the current cooking degree of food material to ensure the cooking effect on the food material.

In this embodiment, the step of identifying a food material type and a food material characteristics of the food material may be carried out locally at the cooking device, or may be carried out at a remote server, as follows:

A main controller 502 is provided in the body of the cooking device, and the control system of the cooking device is located inside the main controller 502; after the image information about the food material is acquired by the image acquisition apparatus, the main controller 502 identifies the food material type and the cooking degree of food material according to the received image information. That is, the food material type and food material characteristics of the food material are identified locally at the cooking device. This can simplify the structure of the cooking device without connecting an external network.

The main controller 502 and the networking unit 508 are provided in the body of the cooking device, and the main control is connected to the remote server through the networking unit 508, and the control system of the cooking device is located inside the remote server. After the image information about the food material is acquired by the image acquisition apparatus, the main controller 502 sends the image information to the remote server via the networking unit 508, and the remote server identifies the food material type and the current cooking degree of food material according to the received image information, and then sends the identification result to the main controller 502. That is, identifying the food material type and food material characteristics of the food material at the remote server. This approach may reduce the difficulty of programming internal to the main controller 502, simplifying development and manufacturing costs.

### Specific Embodiment 1:

In the prior art, in the application of automatic identification of a camera, the camera may continuously capture the color of food, and judge the cooking degree of food material according to the color information about the food; however, this judgment model is a fixed model which is pre-trained by the manufacturer, the cooking degree of food material is relatively fixed, and the user can not set the difference according to taste preference.

The cooking device and the control method thereof according to the present invention can solve the solidified cooking model of the cooking device and satisfy the user's differentiated taste requirements.

Specifically, the cooking device according to the present invention fully automatically cooks food for a user in an intelligent cooking mode; after cooking is complete, the user is given an interactive interface to evaluate the cooking effect, e.g. mostly uncooked, just cooked, and mostly cooked. The control system of the cooking device re-adjusts the cooking program or re-trains the cooking degree identification model according to the user's feedback.

As shown in Fig. 6, the cooking device according to the present invention includes a main controller 502, a camera 504 and an image processing unit 506, a networking unit 508, a heating unit 510, a display unit 512, and an operation setting unit 514.

As shown in Fig. 6, in the intelligent cooking mode, a user puts food to be cooked into a cooking device, a control system of the cooking device captures an image of the food inside the cooking device through a camera 504, and after the image is processed by an image processing unit 506, the processed image is transmitted to a main controller 502.

Two methods can be used to identify an image, by the first method, identification is carried out by the main controller 502, the food material type identification model in the main controller 502 identifies the type of food, and the food cooking degree identification model identifies the current cooking degree of food material; by the second method, identification is carried out by the remote server, the main controller 502 uploads the image to the remote server through the networking unit 508, the food material type identification model in the remote server identifies the type of food, the cooking degree identification model identifies the current cooking degree of food material, and then returns the identified type of food and the current cooking degree of food material to the main controller 502 through the networking unit 508.

After the main controller 502 obtains the food material type and the current cooking degree of food material, the main controller 502 calls and controls the heating unit 510 to cook the food according to the food material type and the current cooking degree of food material. When cooking degree identification result is the food is cooked, the heating unit 510 stops working, the user is prompted to complete cooking, and the cooking degree of food material feedback is displayed on the display unit 512, and the user can choose that the current cooking effect is the food is mostly uncooked, just cooked, and mostly cooked. The control system of the cooking device monitors the user's feedback information and retrains the cooking degree identification model.

Specifically, in the cooking degree identification model, the cooking degree of food material of a food varies according to the food material characteristics of the food, and one or more levels of the cooking degree of food material are labeled from being uncooked to burnt. For example, it is divided into five preset level of the degree to which food is uncooked, soft, cooked, over cooked, and burnt, and each preset cooking degree level to the next preset cooking degree level is divided into three sub-intervals with equal time intervals, for a total of thirteen cooking degree stages. When the user feedback information indicates that the food is mostly uncooked, the preset cooking degree level marked as being cooked moves one stage in the direction of over-cooking, expands in equal proportion in all stages from being uncooked to burnt, and compresses in equal proportion in all stages from being uncooked to burn. On the contrary, if the user feedback information indicates that the food is mostly cooked, the preset cooking degree level marked as being cooked moves one stage in the direction of being uncooked, compresses all the stages from being uncooked to just cooked in equal proportion, and expands all the stages from being just cooked to burn in equal proportion. If the user feedback indicates that the food is just well cooked, the original model is maintained. After the above marking is completed, the cooking program is readjusted or the cooking degree identification model is trained.

The cooking device, the food material category identification model and the cooking degree identification model according to the present invention can be deployed locally in the system, and can also be deployed on a remote server; the cooking degree training process may be carried out locally on the system or on a remote server. For the training of the cooking degree of food material, the cooking degree identification model is adjusted by means of intelligence according to the user feedback results. The cooking degree identification model is adjusted according to the user feedback information, and the user uses the operation information to adjust the cooking program, user-defined cooking degree of food material and user-defined intelligent menu are recorded.

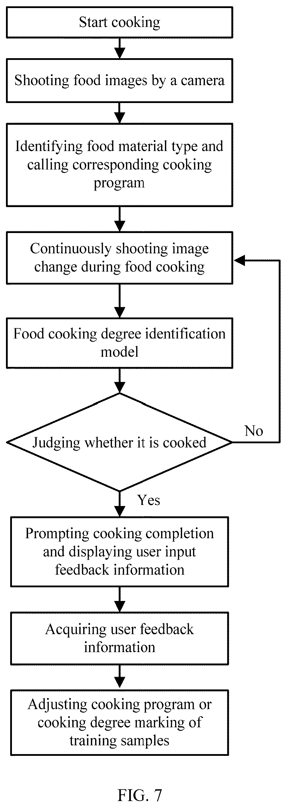

Specifically, taking the self-definition of an intelligent menu of an intelligent oven as an example, the control method for the cooking device according to the present invention is explained. As shown in Fig. 7, the specific implementation steps thereof are as follows:
step 1: a user selects a corresponding menu on a user interaction interface according to the type of food cooked;
step 2: the main controller starts a cooking program according to a menu selected by a user, and controls the heating unit to cook;
step 3: after the cooking is complete, a user is prompted to evaluate the cooking degree of food material on a user interaction interface; and
step 4: recording user input information, and readjusting the cooking program according to the input information so as to enable the user to modify the cooking program and then adjust the cooking degree of food material.

On the oven device, after a user selects a barbecue program and completes heating, the user is prompted on a user interaction interface to evaluate the cooking degree of food material, and three judgments of "mostly uncooked", "just cooked" and "mostly cooked" can be selected, and the user makes cooking degree judgments according to color, odor and taste characteristics. If the actual cooking degree of food material of the oven is normal after the end of roasting according to the menu default cooking program, and the user is accustomed to roasting food to be more cooked, it is feasible to select "mostly uncooked". After monitoring the user's selection, the main controller adjusts the time of the barbecue program according to the user' s selection, and saves and replaces the original cooking program. The next time the user uses the current menu, the main controller will call up a new barbecue program for barbecue. Through this feedback process, the food cooking degree of food material can be closer to the user's preferences, so as to achieve self-defined cooking degree of food material.

### Embodiment 7:

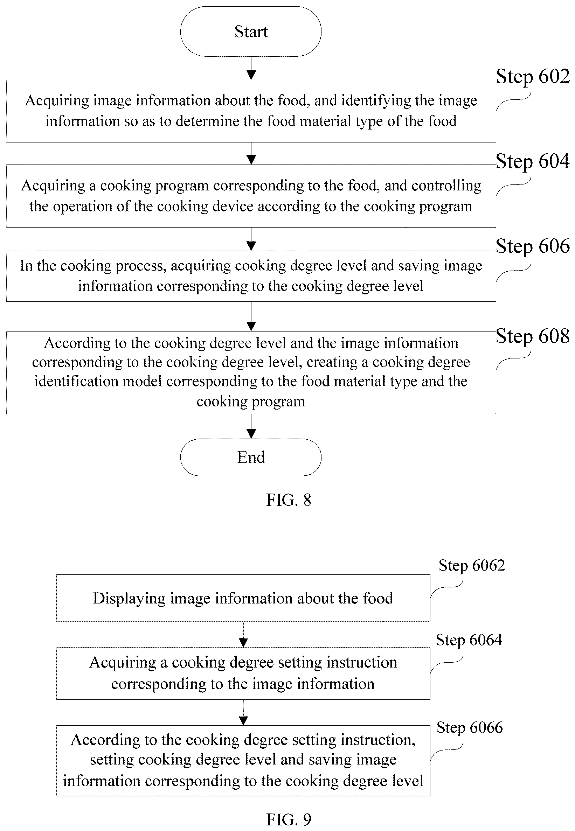

Fig. 8 is a schematic flowchart of a control method for the cooking device according to the embodiment 7 of the present invention, and as shown in Fig. 8, the control method for the cooking device includes:
step 602, acquiring image information about the food, and identifying the image information so as to determine the food material type of the food;
step 604, acquiring a cooking program corresponding to the food, and controlling the operation of the cooking device according to the cooking program;
step 606, in the cooking process, acquiring cooking degree level and saving image information corresponding to the cooking degree level; and
step 608, according to the cooking degree level and the image information corresponding to the cooking degree level, creating a cooking degree identification model corresponding to the food material type and the cooking program.

According to a control method for the cooking device according to the embodiment 7 of the present invention, image information about a food is acquired, and a food material type of the food is determined by means of identifying the image information; a cooking program corresponding to food is acquired and the operation of the cooking device is controlled. During the cooking process, the cooking degree level set by the user is acquired while image information of the food at each cooking degree level is stored. And after the cooking is complete, according to the cooking degree level and the image information corresponding to the cooking degree level, a cooking degree identification model corresponding to the food material type and the cooking program is created. When the user cooks the same food material type again using the same cooking program, the cooking degree identification model established this time is used to judge the cooking degree of food material to ensure the cooking effect of the food, especially the cooking degree effect.

According to the control method for a cooking device according to the present invention, the user's self-definition of the cooking degree of food material, can ensure that the food after cooking is complete meets the user's requirements for the cooking degree of food material, solves the problem of a cooking device solidifying a cooking degree identification model, and meets the user's differentiated requirements for the cooking degree of food material.

Further, Fig. 9 shows a specific schematic flowchart of step 606 in the control method for the cooking device of the embodiment as shown in Fig. 8. As shown in Fig. 9, the step of acquiring cooking degree level and saving image information corresponding to the cooking degree level specifically comprise:
step 6062, displaying image information about the food;
step 6064, acquiring a cooking degree setting instruction corresponding to the image information; and
step 6066, according to the cooking degree setting instruction, setting cooking degree level and saving image information corresponding to the cooking degree level.

During the cooking process, the characteristic value of the cooking degree of food material changes, and the change of the characteristic value of the cooking degree of food material can be observed through the image information, and the user judges the cooking degree of food material by observing the characteristic value of the cooking degree of food material. By observing the change of image information of food during cooking, the change of the cooking degree of food material during cooking can be known in real time.

Therefore, the control method for the cooking device according to the embodiment displays the image information of the food to the user after the image information of the food is acquired; the user observes the change situation of the image information, judges the cooking degree of food material according to its own criteria, and inputs a cooking degree setting instruction after the cooking degree of food material meets its own criteria, and then sets a cooking degree level according to the cooking degree setting instruction input by the user, and saves the image information about the food at the cooking degree level.

Specifically, the control method for the cooking device displays image information of food by means of screen display, and prompts the user to input a cooking degree setting instruction by means of image or voice. The user may enter one or more cooking degree setting instructions during the cooking process. Each cooking degree setting instruction corresponds to cooking degree level and image information corresponding thereto.

More specifically, if only one cooking degree setting instruction is entered, the cooking degree level set by the cooking degree setting command is default to cooked; if multiple cooking degree setting commands are entered, the cooking degree of food material may be specifically set according to the cooking degree of food material. The more the number of cooking degree setting commands, the better the accuracy of cooking degree identification model.

Specifically, cooking degree characteristic values include, but are not limited to: color of food, volume of food, and weight of food; all the above cooking degree characteristic values can be obtained through image identification.

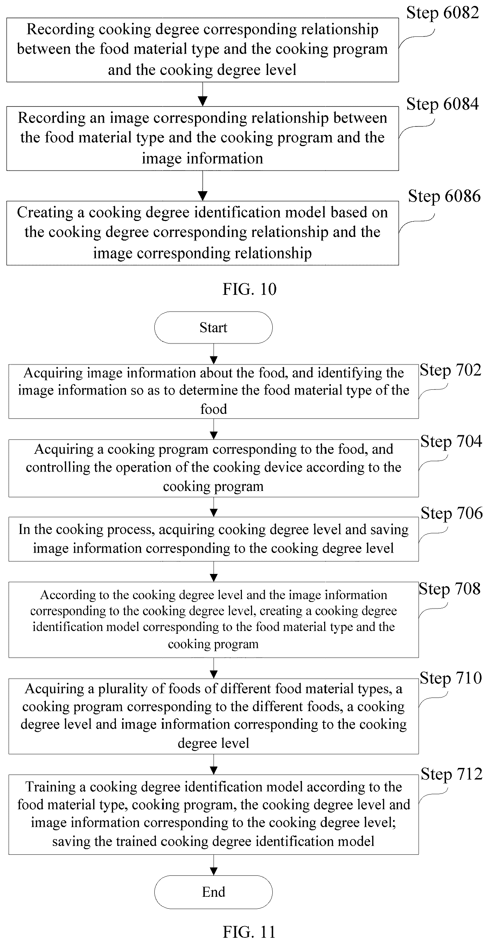

Further, Fig. 10 shows a specific schematic flowchart of step 608 in the control method for the cooking device of the embodiment as shown in Fig. 8. As shown in Fig. 10, according to the cooking degree level and image information corresponding to the cooking degree level, the step of creating a cooking degree identification model corresponding to a food material type and a cooking program specifically comprises:
step 6082, recording cooking degree corresponding relationship between the food material type and the cooking program and the cooking degree level;
step 6084, recording an image corresponding relationship between the food material type and the cooking program and the image information; and
step 6086, creating a cooking degree identification model based on the cooking degree corresponding relationship and the image corresponding relationship.

When different foods are at the same cooking degree level under the same cooking program, their cooking degree characteristic values are different. Taking braised chicken wings and braised beef as examples, it is clear that the color of beef is darker when the color of food is used as the characteristic value of the cooking degree of food material. Therefore, different cooking degree identification models are needed to identify the cooking degree of food material of braised chicken wings and braised beef. That is, foods of different food material types require different cooking degree identification models for cooking degree identification.

When the same food is at the same cooking degree level under different cooking programs, the cooking degree characteristic value is also different. Taking braised chicken wings and fried chicken wings as an example, when the color of food is used as the cooking degree characteristic value, the braised chicken wings will be darker when the braised chicken wings and fried chicken wings are at the same cooking degree level. Therefore, different cooking degree identification models are needed to identify the cooking degree of food material of braised chicken wings and fried chicken wings. That is, foods of the same food material type also require different cooking degree identification models for cooking degree identification under different cooking modes.

Based on the above-mentioned situation, in the embodiment, after acquiring the cooking degree of food material and the corresponding image information, the cooking degree corresponding relationship between the food material type and the cooking program and the cooking degree level is recorded, and the cooking degree corresponding relationship between the food material type and the cooking program and the cooking degree level is recorded; then, based on the cooking degree corresponding relationship and the image corresponding relationship, a cooking degree identification model corresponding to the food material type and the cooking program is created.

Creating and saving the cooking degree identification model according to cooking degree corresponding relationship and the image corresponding relationship can ensure that the cooking degree identification model matches the food material type on the one hand, and the cooking degree identification model matches the cooking program of the food on the other hand.

In addition, when the user uses the cooking device to cook again, the cooking degree identification model created this time is called for identification to ensure the accuracy of cooking degree identification.

### Embodiment 8:

Fig. 11 is a schematic flowchart of a control method for the cooking device according to yet another embodiment of the present invention, as shown in Fig. 11, including:
step 702, acquiring image information about the food, and identifying the image information so as to determine the food material type of the food;
step 704, acquiring a cooking program corresponding to the food, and controlling the operation of the cooking device according to the cooking program;
step 706, in the cooking process, acquiring cooking degree level and saving image information corresponding to the cooking degree level;
step 708, according to the cooking degree level and the image information corresponding to the cooking degree level, creating a cooking degree identification model corresponding to the food material type and the cooking program;
step 710, acquiring a plurality of foods of different food material types, a cooking program corresponding to the different foods, a cooking degree level and image information corresponding to the cooking degree level; and
step 712, training a cooking degree identification model according to the food material type, cooking program, the cooking degree level and image information corresponding to the cooking degree level; saving the trained cooking degree identification model.

The control method for the cooking device according to the embodiment adds a step of training the cooking degree identification model in comparison with embodiment 7. That is, after a cooking degree identification model corresponding to a food material type and a cooking program has been created, the created cooking degree identification model is trained to ensure the accuracy of the cooking degree identification model. Specifically, acquiring a plurality of foods of different food material types, inputting a cooking program corresponding to each food, acquiring cooking degree level and image information corresponding to the food material types and the cooking program, and constructing a cooking degree training data packet based on the above information. The established cooking degree identification model is trained by the cooking degree training data package, and then the cooking degree identification model after the training is completed is saved.

Based on the training of the cooking degree identification model, on the one hand, the corresponding relationship between the cooking degree identification model and the food material types and cooking programs can be ensured, and on the other hand, the cooking degree identification model can meet the needs of users. In addition, the cooking degree training data packet occupies a certain weight in the whole training set, and the more user training times, the cooking degree identification model will be closer to the user's user-defined cooking degree of food material. The next time the user starts the automatic method, the cooking device judges the cooking degree of food material according to the cooking degree identification model completed by the new training, thereby realizing the user-defined cooking degree of food material.

In any of the above-mentioned embodiments, the cooking program includes, but is not limited to: cooking mode, cooking time and cooking temperature. Based on the setting of the above information within the cooking program, different cooking modes of the cooking device for food can be achieved.

In any of the above-mentioned embodiments, the cooking degree level include, but are not limited to: uncooked, soft, cooked, over cooked, and burnt. Based on the above-mentioned level of cooking degree setting, the user can satisfy the setting of different levels of the cooking degree of food material in the cooking process, and monitor the whole process of the cooking process in real time.

On the basis of embodiments 1 and 2, a cooking program corresponding to food is acquired, and the operation of the cooking device is controlled according to the cooking program in two ways:
Method 1: when a cooking program corresponding to a food material type is preset in the cooking device, the cooking program corresponding to the food material type can be directly acquired after the food material type of the food is acquired, and the cooking device is operated according to the cooking program.
Method 2: when a cooking program corresponding to the food material type is not preset in the cooking device, a user is prompted for an input cooking parameter, the user input cooking parameter is recorded, and then the operation of the cooking device is controlled according to the user input cooking parameter. The cooking parameters include, but are not limited to: cooking mode, cooking temperature, cooking time, etc.

Further, in the case where a cooking program corresponding to the food material type is preset in the cooking device, the user can still input cooking parameters and control the cooking device to operate according to the cooking parameters input by the user.

By the above-mentioned control method, the corresponding relationship between the food material type and the cooking program can be ensured, and the corresponding relationship between the created cooking degree identification model and the cooking program and the food material type can be further ensured, and the cooking taste and cooking degree of food material of different food material types can be ensured, and the cooking effect and cooking degree identification accuracy of the food can be improved.

### Embodiment 9:

The embodiment 9 of the present invention provides a computer-readable storage medium having stored thereon a computer program which, when executed by a processor, implements the control method for the cooking device according to any of the above-mentioned embodiments of the present invention. Accordingly, all the advantageous effects of the control method for the cooking device described above will not be set forth herein.

### Example 10:

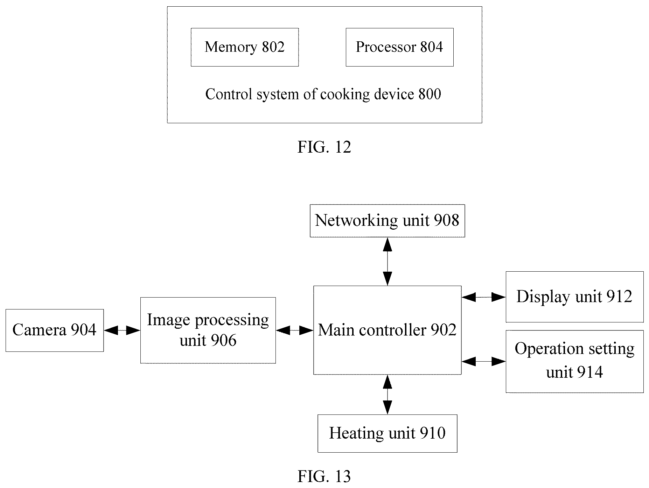

As shown in Fig. 12, the embodiment 10 of the present invention provides a control system 800 of a cooking device, including a memory 802 and a processor 804.

The processor 804 executes the computer program stored in the memory 802, the control method for the cooking device according to any of the above-mentioned embodiments of the present invention can be implemented. Accordingly, all the advantageous effects of the control method for the cooking device described above will not be set forth herein.

### Embodiment 11:

The embodiment 11 of the present invention provides a cooking device including a body, an image acquisition apparatus, an operation setting unit, and a control system of the cooking device according to the embodiment 4 of the present invention.

A cooking cavity is provided in the body, and food can be placed in the cooking cavity. In a food cooking process, an image acquisition apparatus acquires image information about food in a cooking cavity, and sends the image information to a control system of a cooking device, and the control system of the cooking device identifies the image information and determines a food material type of the food; the operation setting unit may acquire a cooking program corresponding to the food, acquire a cooking degree setting instruction input by a user during the cooking process, set different levels of the cooking degree of food material according to the cooking degree setting instruction by a control system of the cooking device, and save image information corresponding to the cooking degree level.

The control system of the cooking device creates a cooking degree identification model corresponding to the food material type and the cooking program based on the cooking degree level and the image information corresponding to the cooking degree level, and the food cooking degree model is used for identifying the cooking degree of food material.

When the user next cooks same food material type using the same cooking program, the control system of the cooking device identifies the cooking degree of food material according to the cooking degree identification model created this time, and controls the cooking device to stop working after the food after cooking is complete, so as to ensure that the food after the cooking is complete meets the cooking degree requirements of the user.

Specifically, when a cooking program corresponding to a food material type is preset in the cooking device, the operation setting unit directly calls for the cooking program corresponding to the food material type; when the cooking program corresponding to the food material type is not preset in the cooking device, the operation setting unit records the cooking parameters manually set by the user after the food material type of the food is acquired, and controls the cooking program to work according to the cooking parameters. The cooking parameters include, but are not limited to: cooking mode, cooking temperature, cooking time, etc.

Specifically, the image acquisition apparatus includes a camera and an image processing unit. The camera can acquire image information about the food and send the acquired image information to the image processing unit in time; after receiving the image information about the food, the image processing unit sends the image information to a control system of the cooking device; and the control system of the cooking device identifies the received image information so as to acquire the food material type of the food.

Specifically, the image processing unit may also perform a simple processing of the image information of the food, for example a format conversion, so that the converted image information complies with the format requirements of the control system of the cooking device.

Further, the cooking device further includes a display unit and a heating unit. The display unit is electrically connected to the image acquisition device, and can display the image information acquired by the image acquisition apparatus to a user, and prompt the user to input a cooking degree setting instruction; the heating unit is electrically connected to the main controller, and the main controller controls the operation of the heating unit until the cooking of the food is completed.

Specifically, the cooking programs include, but are not limited to: a cooking mode, a cooking time and a cooking temperature; based on the setting of the above information within the cooking program, different cooking modes of the cooking device for food can be achieved. The cooking degree level include, but are not limited to: uncooked, soft, cooked, over cooked, and burnt; based on the above-mentioned cooking degree setting, the user can meet the requirement that the food is at different levels of the cooking degree of food material during the cooking process, and monitor the whole process of the cooking process in real time.

In this embodiment, the step of identifying the food material type of the food can be carried out in two ways:
The step of identifying the food material type of the food is carried out locally at the cooking device. A main controller is provided in a body of the cooking device, and a control system of the cooking device is located inside the main controller. After the image information about the food is acquired by the image acquisition apparatus, the main controller identifies the food material type of the food according to the received image information. This method simplifies the structure of the cooking device without connecting an external network.

The step of identifying the food material type of the food is carried out at a remote server. The main controller and the networking unit are provided in the body of the cooking device, and the main control is connected to the remote server through the networking unit, and the control system of the cooking device is located inside the remote server. After the image information about the food is acquired by the image acquisition apparatus, the main controller sends the image information to the remote server via the networking unit, and the remote server identifies the food material type of the food according to the received image information, and then sends the identification result to the main controller. This approach may reduce the difficulty of programming internal to the main controller, simplifying development and manufacturing costs.

### Specific Embodiment 2:

The cooking device and the control method thereof according to the embodiment can solve the solidified cooking model of the cooking device and satisfy the user's differentiated taste requirements.

Specifically, the cooking device according to the embodiment is in a user-defined method, the user can manually set an operation method and set a cooking degree level, and a control system of the cooking device monitors operation settings and setting results of the user, re-adjusts a cooking program, or re-trains a cooking degree identification model.

As shown in Fig. 13, the cooking device according to the embodiment includes a main controller 902, a camera 904 and an image processing unit 906, a networking unit 908, a heating unit 910, a display unit 912, and an operation setting unit 914.

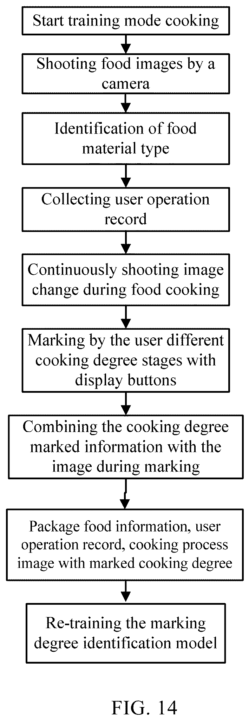

Fig. 14 shows a detailed operational schematic flow chart of the cooking device. As shown in Fig. 14, during the use of the cooking device, a user puts food to be cooked into the cooking device; a control system of the cooking device captures image information about the food inside the cooking device via a camera 904; after the image information is processed by an image processing unit 906, the processed image is transmitted to a main controller 902; and a food material type identification model inside the main controller 902 identifies the food material type of the food; alternatively, the image information is uploaded to a remote server through the networking unit 908 connected to the main controller 902, the food material type of the food is identified on the remote server through the food material type identification model, and the identified food material type is returned to the main controller 902 through the networking unit 908.

The identified food material type is displayed on the main controller 902, and the user is guided on the display unit 912 to set a cooking program having a cooking mode, a cooking time, and a cooking temperature therein by an operation setting unit 914.

After cooking begins, the user is prompted on the display unit 912 to mark the cooking degree of food material. The user can mark one or more levels of the cooking degree of food material by inputting cooking degree setting instructions. The user records the image information at that time for each cooking degree of food material marked until cooking ends.

A cooking degree training data package is composed of food material types, a cooking program input by a user, a cooking degree level set by the user and corresponding image information; the cooking degree of food material data packet is sent to a remote server locally in the cooking device or via the networking unit 908 for training the cooking degree identification model; the trained cooking degree identification model is deployed on a local system or a remote server.

The new cooking degree training data packet occupies a certain weight in the whole training set, and the more user training times, the closer the cooking degree identification model is to the user's definition of the cooking degree of food material. The next time the user starts the automatic method, the control system of the cooking device judges the cooking degree of food material according to the new cooking degree identification model, thereby realizing the user-defined cooking degree of food material.

The embodiment can adjust the judgement of cooking degree identification module on food cooking degree of food material according to user habits; the user can mark the cooking degree level by himself and train the cooking degree identification model. So that the cooking device can adjust the cooking settings according to the user's habits, meet the user' s differentiated needs, and make the cooking device more intelligent.

In addition, the food material type identification model and cooking degree identification model can be deployed locally on the cooking device or on a remote server; the cooking degree identification model may be trained locally on the cooking device or on a remote server.

In this application, the term "plurality" means two or more unless explicitly defined otherwise. The terms "mounted," "connected," "fixed," and the like are used broadly and should be construed to include, for example, "connected" may be a fixed connection, a detachable connection, or an integral connection; "connected" may be directly connected or indirectly connected through an intermediate. The specific meaning of the above terms in the present invention can be understood by a person skilled in the art as the case may be.

In the description of the present invention, the description of the terms "one embodiment", "some embodiments", "a specific embodiment," etc., mean that a particular feature, structure, material, or characteristic described in connection with the embodiment or example is included in at least one embodiment or example of the present invention. In this description, the schematic representations of the terms used above do not necessarily refer to the same embodiment or example. Furthermore, the particular features, structures, materials, or characteristics described may be combined in any suitable manner in any embodiment or example.

The above description is only a preferred embodiment of the present invention and is not intended to limit the present invention, and various modifications and changes may be made to the present invention by those skilled in the art. Any modification, equivalent replacement, or improvement made within the spirit and principle of the present invention shall be included in the protection scope of the present invention.

### ALTERNATIVE EMBODIMENTS

Alternative embodiments are set out in the following clauses.
1. A control method for a cooking device, comprising: acquiring feedback information corresponding to a current cooking degree of food material after cooking is complete; and adjusting and saving cooking parameters corresponding to the food material according to the feedback information.
2. The control method for the cooking device according to clause 1, wherein before the step of acquiring feedback information corresponding to the current cooking degree of food material after cooking is complete, further comprising: acquiring image information of the food material in the cooking device; identifying the image information, and acquiring food material category and food material characteristic of the food material; and determining the current cooking degree of the food material according to the food material category and the food material characteristic.
3. The control method for the cooking device according to clause 2, wherein before the step of acquiring feedback information corresponding to the current cooking degree of food material after the cooking is complete, further comprising: prompting and displaying the current cooking degree after cooking is complete.
4. The control method for the cooking device according to clause 2, wherein the step of determining the current cooking degree of the food material according to the food material category and the food material characteristic specifically comprises: determining the current cooking degree of food material through a cooking degree identification model according to the food material category and the food material characteristic, wherein the cooking degree identification model comprises preset cooking degree level and the cooking parameter, the food material category and the food material characteristic corresponding to the preset cooking degree level.
5. The control method for the cooking device according to clause 4, wherein the step of adjusting and saving cooking parameters corresponding to the food material according to the feedback information comprises: setting a plurality of sub-intervals between two adjacent preset cooking degree levels; according to the feedback information, adjusting the preset cooking degree level corresponding to the current cooking degree to the two adjacent preset cooking degree levels by a preset number of sub-intervals; and at the same time, adjusting the preset cooking degree level corresponding to the current cooking degree to correspond to the cooking parameter and the food material characteristic in the cooking degree identification model.
6. The control method for the cooking device according to clause 5, wherein the preset cooking degree level comprises: uncooked food level, soft food level, cooked food level, over cooked food level, and burnt food level; and the number of the sub-intervals between the two adjacent preset cooking degree levels is three.
7. The control method for the cooking device according to clause 6, wherein the step of according to the feedback information, adjusting the preset cooking degree level corresponding to the current cooking degree to the two adjacent preset cooking degree levels by a preset number of the sub-intervals specifically comprises: the feedback information indicates that the food is mostly uncooked, and the cooked food level of the preset cooking degree level is moved towards one side of over-cooking by one sub-interval, at the same time, expanding the sub-interval between the uncooked food level and the adjusted cooked food level in an equal proportion, and compressing the sub-interval between adjusted cooked food level and burnt food level in an equal proportion; the feedback information indicates that the food is mostly cooked, the cooked food level of the preset cooking degree level is moved towards a soft side by one sub-interval, at the same time, compressing the sub-interval between the uncooked food level and the adjusted cooked food level in an equal proportion, and expanding the sub-interval between the adjusted cooked food level and burnt food level in an equal proportion; the feedback information is suitable, and the cooked food level of the preset cooking degree level is not adjusted.
8. A computer-readable storage medium storing a computer program thereon, wherein the computer program, when executed by a processor, implements the control method for the cooking device according to any one of clauses 1 to 7.
9. A control system of a cooking device, comprising: a memory configured and adapted to store a computer program; and a processor configured and adapted to execute the computer program to implement the control method for the cooking device according to any one of clauses 1 to 7.
10. A cooking device, comprising: a body, wherein a cooking cavity is provided in the body, and food material can be placed in the cooking cavity; an image acquisition apparatus provided on the body for acquiring image information of the food material; an information acquisition device arranged on the body for acquiring feedback information corresponding to a current cooking degree of food material; and the control system of the cooking device according to clause 9, wherein the control system of the cooking device is electrically connected to the image acquisition apparatus and the information acquisition device, and can adjust and save cooking parameter corresponding to the food material according to the feedback information.
11. The cooking device according to clause 10, wherein the cooking device further comprises a main controller provided inside the body, and a control system of the cooking device is located inside the main controller; or the cooking device further comprises a main controller and a networking unit, wherein the main controller is provided inside the body and connected to a remote server through the networking unit, and the control system of the cooking device is located inside the remote server.
12. The cooking device according to clause 10 or 11, wherein the image acquisition apparatus comprises: a camera for acquiring image information of the food material; an image processing unit electrically connected to the camera and the control system of the cooking device, for transmitting the image information to the control system of the cooking device.
13. The cooking device according to clause 11, further comprising: a heating unit provided in the body and electrically connected to the main controller, the main controller controlling the heating unit to work according to the cooking parameters; an operation setting unit provided on the body and electrically connected to the main controller for acquiring an operation instruction.
14. A control method for a cooking device, comprising: acquiring image information of a food, and identifying the image information to determine food material type of the food; acquiring a cooking program corresponding to the food, and controlling the cooking device to work according to the cooking program; acquiring cooking degree level of the food and storing the image information corresponding to the cooking degree level during cooking; and creating a cooking degree identification model corresponding to the food material type and the cooking program according to the cooking degree level and the image information corresponding to the cooking degree level.
15. The control method for the cooking device according to clause 14, wherein the step of acquiring cooking degree level of the food and storing the image information corresponding to the cooking degree level specifically comprises: displaying the image information of the food; acquiring a cooking degree setting instruction corresponding to the image information; according to the cooking degree setting instruction, setting the cooking degree level and saving the image information corresponding to the cooking degree level.
16. The control method for the cooking device according to clause 14 or 15, wherein the step of creating a cooking degree identification model corresponding to the food material type and the cooking program according to the cooking degree level and the image information corresponding to the cooking degree level specifically comprises: recording a cooking degree corresponding relationship between the food material type and the cooking program and the cooking degree level; recording an image corresponding relationship between the food material type and the cooking program and the image information; and creating the cooking degree identification model according to the cooking degree corresponding relationship and the image corresponding relationship.
17. The control method for the cooking device according to clause 16, wherein after the step of creating the cooking degree identification model, further comprising: acquiring a plurality of foods of different food material types, a cooking program corresponding to the different foods, cooking degree level and the image information corresponding to the cooking degree level; training the cooking degree identification model according to the food material type, the cooking program, the cooking degree level and the image information corresponding to the cooking degree level; and saving the trained cooking degree identification model.
18. The control method for the cooking device according to clause 14 or 15, wherein the step of acquiring a cooking program corresponding to the food, and controlling the cooking device to work according to the cooking program specifically comprise: calling a preset cooking program corresponding to the food material type, and controlling the cooking device to work according to the cooking program; or acquiring a cooking parameter corresponding to the food material type, and controlling the cooking device to work according to the cooking parameter.
19. The control method for the cooking device according to clause 14 or 15, wherein a cooking mode, a cooking time and a cooking temperature are set in the cooking program; and/or the cooking degree level comprises: uncooked food level, soft food level, cooked food level, over cooked food level, and burnt food level.
20. A computer-readable storage medium storing a computer program thereon, wherein the computer program, when executed by a processor, implements the control method for the cooking device according to any one of clauses 14 to 19.
21. A control system of a cooking device, comprising: a memory configured and adapted to store a computer program; and a processor configured and adapted to execute the computer program to implement the control method for the cooking device according to any one of clauses 14 to 19.
22. A cooking device, comprising: a body in which food can be placed; an image acquisition apparatus provided on the body for acquiring image information of the food; an operation setting unit provided on the body for acquiring a cooking program and a cooking degree setting instruction corresponding to the food; and the control system of the cooking device according to clause 21, which is electrically connected to the image acquisition apparatus and the operation setting unit.
23. The cooking device according to clause 22, wherein the cooking device further comprises a main controller provided in the body, and a control system of the cooking device is located inside the main controller; or the cooking device comprises a main controller and a networking unit, wherein the main controller is provided inside the body and connected to a remote server through the networking unit, and a control system of the cooking device is located inside the remote server.
24. The cooking device according to clause 22 or 23, wherein the image acquisition apparatus comprises: a camera provided on the body for acquiring image information of the food; and an image processing unit electrically connected to the camera and the control system of the cooking device for transmitting the image information to the control system of the cooking device.
25. The cooking device according to clause 24, wherein the cooking device further comprises a display unit electrically connected to the image acquisition apparatus for displaying the image information; the cooking device further comprises a heating unit electrically connected to the main controller, and the main controller controls the heating unit to work according to the cooking program; and/or a cooking mode, a cooking time and a cooking temperature are set in the cooking program; and/or the cooking degree level comprises: uncooked food level, soft food level, cooked food level, over cooked food level, and burnt food level.

## Claims

1. A control method for a cooking device, comprising: acquiring (602) image information of a food, and identifying the image information to determine food material type of the food; acquiring (604) a cooking program corresponding to the food, and controlling the cooking device to work according to the cooking program; **characterised in that** acquiring (606) cooking degree level of the food set by the user and storing the image information corresponding to the cooking degree level during cooking; and creating (608) a cooking degree identification model corresponding to the food material type and the cooking program according to the cooking degree level and the image information corresponding to the cooking degree level; the cooking degree identification model is configured to identify the cooking degree of food when the same food material type is cooked next time by using the same cooking program.

2. The control method for the cooking device according to claim 1, wherein the step of acquiring (606) cooking degree level of the food and storing the image information corresponding to the cooking degree level specifically comprises: displaying (6062) the image information of the food; acquiring (6064) a cooking degree setting instruction corresponding to the image information; according to the cooking degree setting instruction, setting (6066) the cooking degree level and saving the image information corresponding to the cooking degree level.

3. The control method for the cooking device according to claim 1 or 2, wherein the step of creating (608) a cooking degree identification model corresponding to the food material type and the cooking program according to the cooking degree level and the image information corresponding to the cooking degree level specifically comprises: recording (6082) a cooking degree corresponding relationship between the food material type and the cooking program and the cooking degree level; recording (6084) an image corresponding relationship between the food material type and the cooking program and the image information; and creating (6086) the cooking degree identification model according to the cooking degree corresponding relationship and the image corresponding relationship.

4. The control method for the cooking device according to claim 3, wherein after the step of creating (608) the cooking degree identification model, further comprising: acquiring (710) a plurality of foods of different food material types, a cooking program corresponding to the different foods, cooking degree level and the image information corresponding to the cooking degree level; training (712) the cooking degree identification model according to the food material type, the cooking program, the cooking degree level and the image information corresponding to the cooking degree level; and saving the trained cooking degree identification model.

5. The control method for the cooking device according to claim 1 or 2, wherein the step of acquiring (604) a cooking program corresponding to the food, and controlling the cooking device to work according to the cooking program specifically comprise: calling a preset cooking program corresponding to the food material type, and controlling the cooking device to work according to the cooking program; or acquiring a cooking parameter corresponding to the food material type, and controlling the cooking device to work according to the cooking parameter.

6. The control method for the cooking device according to claim 1 or 2, wherein a cooking mode, a cooking time and a cooking temperature are set in the cooking program; and/or the cooking degree level comprises: uncooked food level, soft food level, cooked food level, over cooked food level, and burnt food level.

7. A computer-readable storage medium storing a computer program thereon, wherein the computer program, when executed by a processor, implements the control method for the cooking device according to any one of claims 1 to 6.

8. A control system of a cooking device, comprising: a memory (402, 802) configured and adapted to store a computer program; and a processor (404, 804) configured and adapted to execute the computer program to implement the control method for the cooking device according to any one of claims 1 to 6.

9. A cooking device, comprising: a body in which food can be placed; an image acquisition apparatus provided on the body for acquiring image information of the food; an operation setting unit (514, 914) provided on the body for acquiring a cooking program and a cooking degree setting instruction corresponding to the food; and the control system of the cooking device according to claim 8, which is electrically connected to the image acquisition apparatus and the operation setting unit (514, 914).

10. The cooking device according to claim 9, wherein the cooking device further comprises a main controller (502, 902) provided in the body, and a control system of the cooking device is located inside the main controller (502, 902); or the cooking device comprises a main controller (502, 902) and a networking unit (508, 908), wherein the main controller (502, 902) is provided inside the body and connected to a remote server through the networking unit (508, 908), and a control system of the cooking device is located inside the remote server.

11. The cooking device according to claim 9 or 10, wherein the image acquisition apparatus comprises: a camera (504, 904) provided on the body for acquiring image information of the food; and an image processing unit (506, 906) electrically connected to the camera (504, 904) and the control system of the cooking device for transmitting the image information to the control system of the cooking device.

12. The cooking device according to claim 11, wherein the cooking device further comprises a display unit (912) electrically connected to the image acquisition apparatus for displaying the image information; the cooking device further comprises a heating unit (510, 910) electrically connected to the main controller (502, 902), and the main controller (502, 902) controls the heating unit (510, 910) to work according to the cooking program; and/or a cooking mode, a cooking time and a cooking temperature are set in the cooking program; and/or the cooking degree level comprises: uncooked food level, soft food level, cooked food level, over cooked food level, and burnt food level.
